# EUROPEAN PATENT SPECIFICATION

(11) **EP 4 097 009 B1**
(45) Date of publication and mention of the grant of the patent: **14.01.2026**
(21) Application number: 21702530.3
(22) Date of filing: 20.01.2021
(51) Int. Cl.: B64F 1/22, B64U 70/80

(54) **LANDING PLATFORM AND SYSTEM FOR POSITIONING AND ALIGNING AERIAL VEHICLE ON IT**
LANDEPLATTFORM UND SYSTEM ZUM POSITIONIEREN UND AUSRICHTEN VON LUFTFAHRZEUGEN DARAUF
PLATE-FORME D'ATTERRISSAGE ET SYSTÈME DE POSITIONNEMENT ET D'ALIGNEMENT DE VÉHICULE AÉRIEN SUR CELLE-CI

(30) Priority: 29.01.2020 LT 2020007
(43) Date of publication of application: 07.12.2022
(73) Proprietor: IONOS PRIVATE CAPITAL COMPANY P.C., 70013 Heraklion, Crete (GR)
(72) Inventor: SAMUOLIS, Linas, 09200 Vilnius (LT); ODINOKOV, Sergey, 06227 Vilnius (LT)
(74) Representative: Gerasimovic, Liudmila
(86) International application number: PCT/IB2021/050422
(87) International publication number: WO 2021/152427

(56) References cited:
- WO-A1-2019/151947
- WO-A1-2019/160540
- CN-U- 207 791 147
- DE-B4- 102012 008 776
- US-A1- 2016 001 883
- US-A1- 2018 148 170
- ROBOTOPIA: "Robotopia - autonomous UAV systems", 18 December 2020 (2020-12-18), XP055788063, Retrieved from the Internet <URL:https://web.archive.org/web/20201218020224/https://www.robotopia.eu/> [retrieved on 20210322]

## Description

### Field of the invention

The invention is related to the field of transport, more particularly to aviation equipment and systems relating to the transportation and maneuvering of aircrafts and more particularly to the positioning and aligning of unmanned aerial vehicles, namely, capable of landing or taking-off vertically, on specially designed landing platforms of ground stations and other landing sites.

### Background of the invention

Positioning aerial vehicles with vertical take-off and landing (VTOL) during landing with an accuracy, sufficient for direct manipulation with its payload or its energy sources after landing without additional adjustment or correction to the proper position is extremely difficult due to impact of many random factors to the aerial vehicle (wind gusts, ground effect, inaccuracy in determining position relative to the ground and the landing platform itself). Therefore, there are various methods of mechanically adjusting the position of an aerial vehicle on the landing platform during or after landing.

There are known several main categories of technical solutions:
- Landing on guides, usually on one or more protruding cones or pyramids (for example, WO2017019728A1, etc.).

Such solutions occupy a certain volume of the aerial vehicle that could be used for payload. Protruding guides can be dangerous for the structure of the aerial vehicle (for example, propellers) if the aerial vehicle misses landing on said guides. Guides limit the space for possible manipulations with payload and/or energy sources. There may be a significant unexpected tilt of the aerial vehicle during landing. Such solutions require sufficiently accurate positioning of the aerial vehicle in space during landing.
- Landing into guide holes or recesses, usually shaped as cones, pyramids or spheres (for example, WO2018039784, US2019344888 A1, US2016144982 A1, etc.).

Such solutions cause interference between the maintained position of the aerial vehicle in space during landing and the platform may cause mechanical lateral impact on it, which can destabilize the aerial vehicle and cause a crash. Missing the holes during landing can lead to an unstable position of the aerial vehicle and its falling on the side.
- Pushing the aerial vehicle with various types of pushers from one or more lateral sides in a rectilinear forward motion, or with pushers rotating around fixed axes (for example, WO2019085151, WO2019055685, CN10171545 A, etc.).

Such solutions require complex and massive mechanisms. Some of these solutions comprise elements protruding above the level of the landing platform, which is dangerous and can result in a collision, for example, when the aerial vehicle is affected by a gust of wind.
- Impact on the aerial vehicle by pushers moving in curved or spiral slots. This category is the closest to the proposed solution. German patent application DE102012008776 describes a centering device for round blanks, including two or more discs arranged coaxially one above the other, where numerous spirally curved slots (through grooves) converging toward the center are cut in the upper disc, through which, as the disc rotates, pins slide at the same distance from the center of each disc, arranged symmetrically on the respective guides of the lower disc and pushing the round blank towards the center of the discs.

A similar solution is described in the device according to application WO 2019160540 designed for landing unmanned aerial vehicles (UAV). Said device is also comprising a bottom and top plate, wherein the fixed top plate comprises numerous spirally curved slots (through grooves), and the rotating bottom plate comprises a corresponding number of pins which extend into the top plate through the through-going grooves, and are able to push the object on the top plate along the spirally curved slots (grooves).

Drawbacks of known solution are as follows:
- The solution does not provide for the aligning of UAV in the required direction;
- Since the pins move towards single center, the known device can only position the object in the center of the top plate, but cannot ensure its orientation angle;
- Only one attempt is possible to center the object after its landing;
- After the object is centered, the top plate (landing platform) must be returned to its initial position, by spreading the pins from the center towards the periphery;
- It is necessary to control the reverse of the drive, and the presence of sensors is required to indicate if the pins reached their end and initial position, otherwise the drive may damage the pins and the plate driving them.
- Spiral slots (grooves) require complex mechanics below them for moving the pins toward the center, which are a factor that reduces reliability;
- Blocking one of the pins with foreign objects, such as dirt, can completely block the mechanism that moves the pins, i.e., the device can become completely inoperable;
- The size of rotating plate must be larger than the perimeter of the object (UAV), which is bulky and increases the weight of the device;
- The presence of many spiral slots (grooves) requires more sophisticated protection against possible precipitation and dirt;
- If one of the pins gets inside the perimeter of the landed UAV, not only centering becomes impossible, but the movement of supports in a spiral can also damage the UAV;
- During landing, UAV can sit directly on the pin, furthermore, only one pin pushes the UAV at the beginning of the centering process, which requires a reinforced structure for both the pin itself and its attachment and the drive that moves it;
- Centering of UAV in the manner disclosed above is mechanically inefficient because initially the rotational motion of the moving plate is converted into a sliding motion of the pin, overcoming the friction of the pin against the edge of the groove, after which the pin pushes the UAV by applying force at a non-optimal angle.

In the modern world, the automation and robotization of logistics processes being constantly developed, and many of these processes are associated with the delegation of some functions to unmanned vehicles, e.g., unmanned aerial vehicles (UAV). Systems developed on the basis of said UAV inevitably serve both their payloads and energy sources. Since the flight duration of most UAV is significantly shorter than their charging time, there is a need to replace them quickly and reliably. In most cases, such a replacement is associated with fixing the energy source in a slot, compartment, on rails or on UAV guides. In other words, the solutions require the correct position of UAV and its correct alignment relative to the operating mechanisms of the service stations (ground stations). Only the correct position of UAV in space and its correct alignment relative to the landing platform of the ground station can ensure the autonomous servicing of UAV energy sources and, by analogy, of UAV payloads.

It should be emphasized that placement of the landed UAV after landing at the point with correct two-dimensional or three-dimensional coordinate is not sufficient for automated operations to be performed on the UAV - it is also necessary to orient the UAV correctly.

US 2018/148170 A1 discloses a charging station for an unmanned aerial vehicle includes a landing surface having a centering wheel rotatably associated with the landing surface and a center hub and spokes extending from the center hub. A rotator coupled to the centering wheel can rotate the centering wheel to align the unmanned aerial vehicle with a first charging terminal and a second charging terminal

Thus, there is a need for a mechanically simple, reliable, lightweight, and inexpensive system for positioning and aligning UAV on the landing platform of ground or other service station, In such a system, which would always be ready to operate and would not require any launching or initialization conditions, would have an improved protection of elements of the landing platform from water and contaminants, and would eliminate the risk of blocking the alignment action (process) relating to incorrect initial position of UAV on the landing platform or the properties of the system itself.

### Summary of the invention

For the above-mentioned task a technical solution is proposed, characterized by the totality of features, as set forth in appended claim 1.

In the preferred embodiment of the proposed invention said spiral guide is a logarithmic spiral, comprising from one to one and a half turns.

Said groove is made on one or both sides of a line connecting the centers of rotation of the discs, and is optionally through.

The drives driving the discs into rotation in opposite directions are configured as either two separate or one joint drive, and can also be mounted directly in the discs; besides the drives can drive the discs directly or via a reducer. The drive can be an electric, pneumatic or hydraulic motor, as well as a threaded shaft driving them into rotation under the weight of UAV landed on a platform.

The landing platform can further be equipped with disc's position and/or rotation sensors. The platform outside the groove(s) and the discs is optionally comprising one or more through holes configured to operate with payload and/or energy sources of the unmanned aerial vehicle landed and properly positioned and aligned on the platform.

Another object of the proposed invention is a system for positioning and aligning of vertical take-off and landing aerial vehicle on the landing platform according to present invention. The principal distinction of proposed system is that the unmanned aerial vehicle is equipped with supporting elements, configured to interact with the spiral guides on the discs of the landing platform and with the groove on the platform, where the supporting elements are made in the form of three main landing legs of the same height, installed on the base of unmanned aerial vehicle at vertices of an imaginary or real isosceles triangle, inscribed at the base of unmanned aerial vehicle, wherein the landing leg at the vertex opposite the base of the isosceles triangle is equipped with retractable vertically downwards pin, while two other landing legs are made cylindrical.

The retractable pin of the landing leg according to present invention is configured to fall into the groove(s) of the landing platform, for example, under its own weight, or, preferably, being made with a pushing element inside, such as pushing spring, electric or pneumatic drive, and outer diameter of the pin being corresponding to the width of the groove of the platform, not exceeding this width.

The height of cylindrical leg is corresponding the height of the spiral guide of the disk of the platform, and outer radius of the leg is corresponding the offset of the spiral guide from the center of the disk of the landing platform, wherein the cylindrical landing legs are able to slide along the inner side surface of the respective spiral guides and for this purpose they are optionally provided with cylindrical skirts, rotating freely around an axis of the leg.

Diameter of each disc of the landing platform of the system according to present invention is chosen to ensure that each cylindrical landing leg is on the respective disc when the unmanned aerial vehicle lands, and distance between the discs is chosen so that axes of rotation of the discs of the landing platform coincide with the axes of cylindrical landing legs in final position of the unmanned aerial vehicle on the landing platform.

The unmanned aerial vehicle is optionally further equipped with one or more additional landing legs outside said imaginary or real isosceles triangle at the base of the aerial vehicle.

Said groove of the landing platform may be arranged on both sides of the line, connecting the centers of rotation of the discs, where said imaginary or real triangle at the base of the aerial vehicle may be part of a square, formed by two adjacent sides and a diagonal of imaginary or real square at the base of the unmanned aerial vehicle, and the additional leg is arranged on the fourth vertex of imaginary or real square.

One or all of the landing legs, other than two main cylindrical legs, may also be made cylindrical.

In an embodiment of the present invention, some or all of the landing legs, other than main leg with retractable pin, are optionally also equipped with the retractable pin.

In another embodiment of the present invention, all the landing legs are made the same.

In the preferred embodiment of the proposed invention, upper surface of the discs of the landing platform and/or bottom surface of the landing legs of the unmanned aerial vehicle is partly or completely made of low-friction material, such as polyoxymethylene, nylon or polytetrafluoroethene, and/or bottom surface of the landing legs is made spherical.

In a variant of the system according to the present invention, the landing platform can be configured to serve more than one unmanned aerial vehicle. For this purpose, it might be equipped with two or more groups of centering means comprising said pairs of discs and respective grooves.

### Brief description of drawings

The proposed technical solution is explained by drawings, which illustrate the essence, but do not limit the scope of protection of the invention, which is defined by the appended claims.
Fig. 1 shows a landing platform 1 and UAV 2 landing on it. Aligning elements - two discs 3 with spiral guides 5a and 5b and groove 4 - are shown on the platform.
Fig. 2. View of the UAV 2 from the base side (from the bottom). Shown is imaginary/real triangle 9 and three main landing legs of UAV arranged at its vertices - two cylindrical 6 and one leg 7 with retractable pin 15. Payload or energy source 30, accessible for service from below, are also shown.
Fig. 3. View of the landing platform 1 with UAV 2 landed on it, which is in the correct position and correctly aligned - cylindrical legs 6 of UAV being coaxial with the discs, and retractable pin of the third leg 7 being in the groove.
Fig. 4 shows UAV 2 (variant with a square base) landing on the landing platform 1 with two discs 3 arranged at diagonally opposite vertices of the imaginary square with an edge 19, and two grooves 4 and 4b, with centers on the remaining two vertices of the imaginary square and located along its diagonal connecting said two vertices.
Fig. 5. View of the UAV 2 (variant with a square base) from the base side (from the bottom). Are shown imaginary square 17 at the base of the UAV and three main landing legs of UAV, located at its vertices - two cylindrical legs 6 and one leg 7 with retractable pin 15, as well as one additional landing leg 16. Payload or energy source 30, accessible for service from below, are also shown.
Fig. 6. View of the landing platform 1 with UAV 2 landed on it, which is in the correct position and correctly aligned - cylindrical legs 6 of UAV 2 are coaxial with discs 3, and retractable pin 15 of third main landing leg 7 is in groove 4b.
Fig. 7. Bottom view of landing platform 1, designed for receiving UAV with only three main landing legs. Shown are two separate drives 13 of discs 3, rotation or position sensors 22 of discs 3 and openings 14 for servicing the payload or energy source of UAV.
Fig. 8. Bottom view of landing platform 1, designed for receiving UAV with three main landing legs and one additional leg. Shown are two separate drives 13 of discs 3, rotation or position sensors 22 of discs 3 and opening 14 for servicing the payload or energy source of UAV.
Fig. 9. Side view of landing platform 1 shows a variant of the drive of discs with spiral guides 5 using two threaded shafts 23.
Fig. 10 shows a process of landing UAV 2 with a triangular base on landing platform 1.
Fig. 11 demonstrates a process of interaction of spiral guides with the landing legs of UAV, namely, applying of force in direction 25 of spiral guide 5b -to the leg 6, and in direction 26 (towards the groove) - on the leg 7.
Fig. 12 demonstrates additionally further guiding action of groove 4 on landing leg 7 with the retractable pin inserted into the groove(s).
Fig. 13 shows the UAV at the end of the aligning process. UAV is correctly positioned and aligned on platform 1.

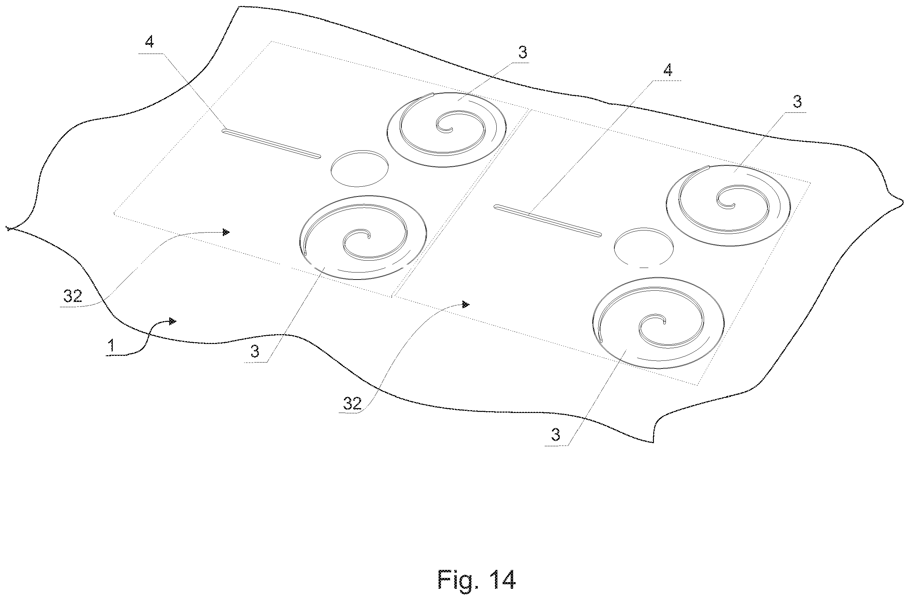

Fig. 14 shows a landing platform 1 with two groups of centering means 32.

### Modes of embodiments of the invention

Modes of embodiments of the invention are examples illustrating this invention, however not limiting its scope of protection.

### Description of the system and the landing platform

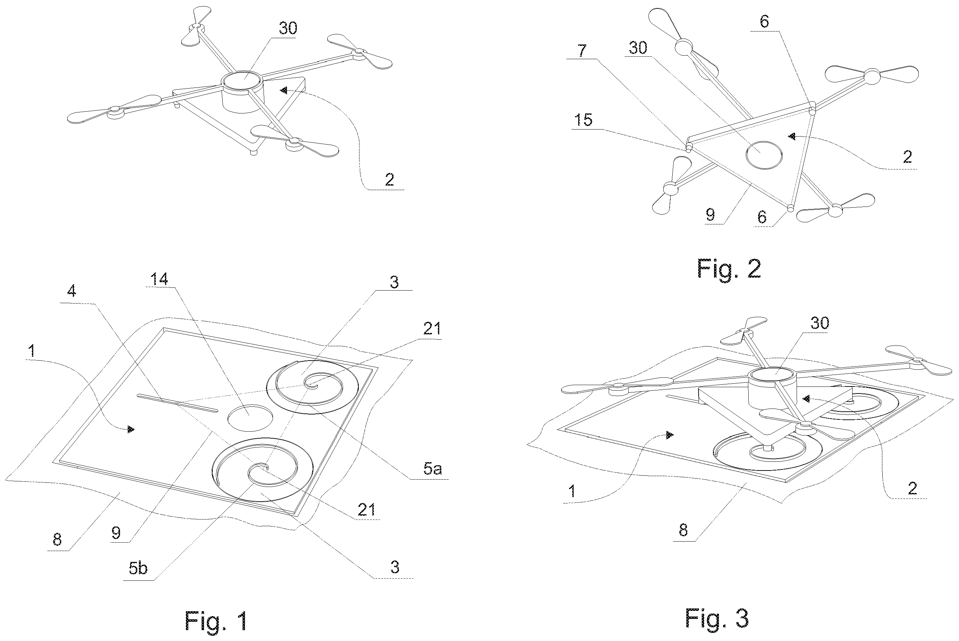

Fig. 1 shows schematically the landing platform 1 and landing unmanned aerial vehicle 2, which are the key elements of the aerial vehicle positioning and aligning system according to the present invention, and the elements of which are configured in special way with respect to each other to achieve maximum efficiency in their interaction when positioning and aligning unmanned aerial vehicle during (after) landing. Thus, the design of landing platform 1 and supporting elements of UAV 2 are bind by unified inventive concept into UAV positioning and alignment system.

Unmanned aerial vehicle (UAV) 2 is a vertical take-off and landing (VTOL) vehicle, which positioning accuracy is sufficient to land within the perimeter of landing platform 1. UAV is designed for automated manipulation with its payload and/or its energy sources 30.

In the principle variant, each UAV 2, serviced by the system, is equipped with three main landing legs 6 and 7 of the same height (Fig. 2), arranged at the vertices of the imaginary or real isosceles triangle at the base of the aerial vehicle 2 (Figs. 1, 2, 3, 10, etc.). Landing leg 7 at the vertex opposite the base 31 of the isosceles triangle, is equipped with retractable vertically downwards pin 15. Optimally, pin 15 is made with pushing spring inside it, and the outer diameter of pin 15 corresponds to the width of groove 4 of the platform, not exceeding it. Two landing legs 6, arranged at the base of the isosceles triangle are cylindrical in shape and, optimally, are provided with a cylindrical skirt, rotating freely around the axis of the leg.

UAV may be equipped with additional landing legs 16 located outside the perimeter of the imaginary or real triangle at the base of UAV. The total number of legs and their design is chosen to ensure reliable (and even) retention of UAV on the horizontal plane of landing platform 1. Preferably, the bottom part of the legs is made of material or equipped with a mechanism (such as a ball wheel) that reduces friction against the landing platform.

Landing platform 1 (Fig. 1, 4, 10, etc.) is a part of ground station 8 for servicing UAV 2, acting as a surface on which UAV 2 lands. Platform 1 is designed for the required positioning and aligning of UAV 2 during and after landing, and is equipped with centering means configured to match and interact with supporting elements at the base of UAV.

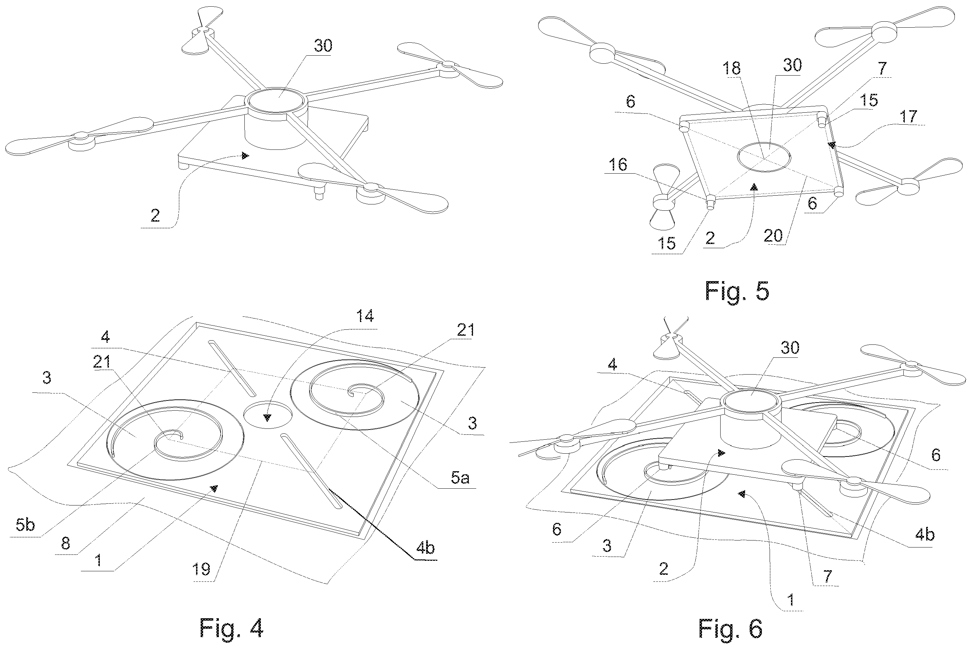

The means for centering and positioning UAV 2 on landing platform 1 according to the present invention comprise of three principal elements: two rotating discs 3 with spiral guides and groove(s) 4, 4b (Fig. 1, 4, etc.).

Landing platform 1 is a flat horizontal surface, on which said two rotatable flat horizontal discs 3 are arranged with possibility of rotation so that:
- their upper surfaces would be on a same level with the upper surface of platform 1;
- their axes of rotation would coincide with the axes of the main cylindrical legs 6 of UAV, received on the platform in the required end position (Fig. 3, 6, 13).

The diameter of each disc 3 is chosen so as to ensure the required probability of receiving the cylindrical legs 6 of UAV 2 on the respective discs during landing, taking into account the positioning accuracy of UAV.

Based on the analysis of accuracy of positioning and keeping the azimuth of UAV in flight, and taking into account the influence of external factors, such as wind gusts, on UAV during the flight, it is possible to determine the probability of deviation of cylindrical leg 6 from the center of disc 3 . For example, deviation will be less than 50 mm for 50% of landings, deviation will not exceed 100 mm for 90% of landings, and deviation will not exceed 150 mm for 98% of landings.

The diameter of the disc is chosen to be equal to double deviation with the required probability of successful positioning. For example, 200 mm (2 x 100 mm) for 90 % of successful landings. In other words, the diameter of the disk is a compromise between its size (price, weight) and the probability of successful positioning after landing.

On the upper side of each disc 3 there is a continuous narrow spiral 5a, 5b (Figs. 1, 4, etc.) protruding above the surface of the disk, made in the form of a strip, the edge of which is fixed on the surface of disc 3, and which ensures the maximum possibility of sliding of UAV supporting elements (legs 6, 7, 16) along the inner side surface of such a spiral guide. Each spiral 5 begins with an offset from the center of disc 3 and ends at the outer side of the disc. Furthermore, the spiral is left-handed 5b on one disk and is right-handed 5a on the other. Optimally, the spiral is logarithmic and comprises one to one and a half turns.

The height of spiral 5 corresponds to the height of cylindrical legs 6, 7, 16 of UAV, and the offset of the spiral beginning from center 21 of the disc corresponds to the radius of the cylindrical leg of UAV.

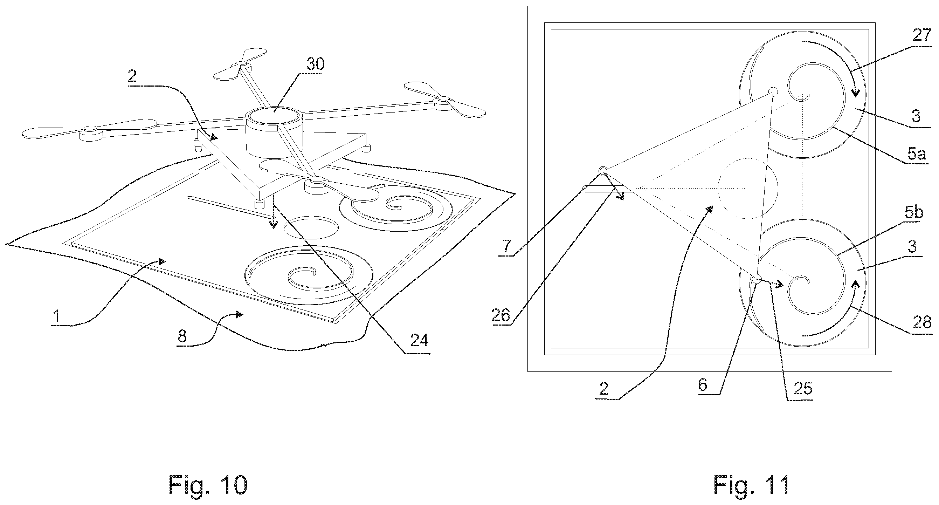

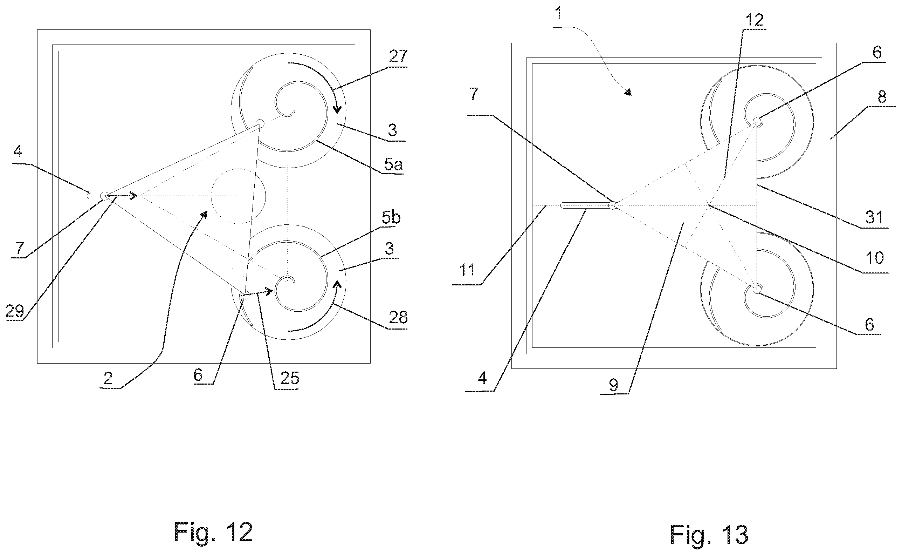

Cylindrical landing legs 6 are to be able to slide along the inner side surface of the respective spiral guides 5. For this purpose, they can be provided with cylindrical skirts, rotating freely around the axis of the leg. Under tangential force 25 from the side of spiral guide 5 (Fig. 11, 12), each such leg moves towards the center of the respective disc 3, carried away by the curvature of spiral guide 5.

The thickness of the spiral, as well as the thickness of the disc, is determined by the required strength characteristics of the structure.

Furthermore, the platform is equipped with a narrow straight groove 4 (Fig. 1) arranged in such way, that:
- the line of groove 11 (e.g., Fig. 13) would be perpendicular and would pass through the center of the line connecting the centers of discs 3;
- the center of main landing leg 7 with retractable pin 15 of UAV, received on platform 1 in the required end position (for example, Fig. 3, 13) would be in the groove line, optimally, in the center of the groove.

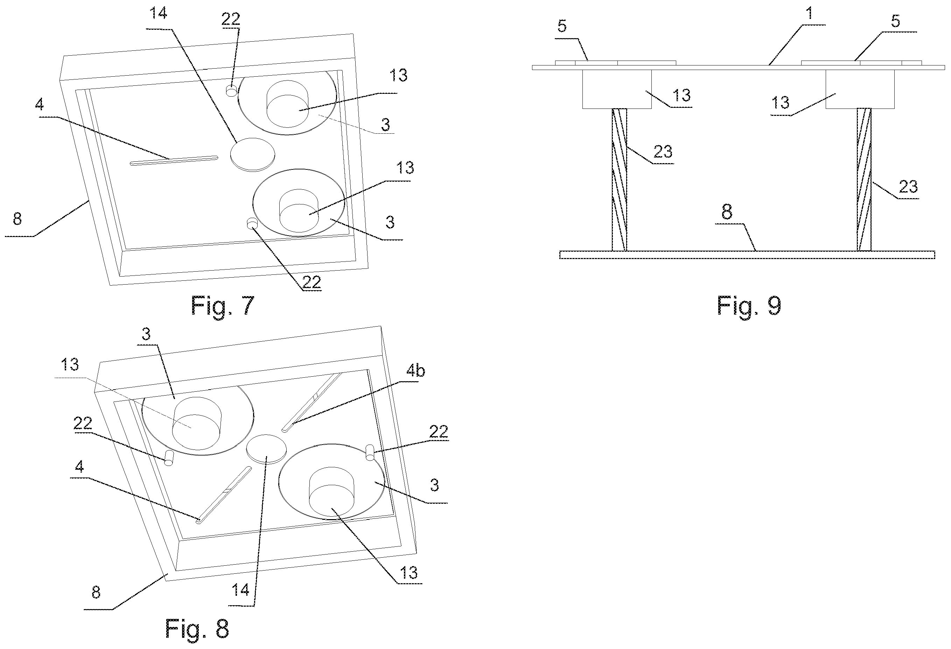

The width of groove 4 corresponds to the diameter of retractable pin 15 and the depth of the groove corresponds to the length of pin 15. Furthermore, the groove may be through (Fig. 7, 8).

The length of groove 4 is chosen so as to ensure that retractable pin 15 of main landing leg 7 of UAV would fall into groove 4 when positioning and aligning UAV 2 on platform 1 after landing.

If the method of servicing UAV on the landing platform is compatible with two end positions, then platform 1 may comprise a second groove 4b (Fig. 4, 8) arranged mirrored to the first groove 4 relative to the vertical plane passing through the centers of discs 3.

Accordingly, the serviced UAV 2 (Fig. 5) can be equipped with an additional fourth cylindrical leg 16, arranged at the fourth vertex of the imaginary or real square, while the main landing legs 6 and 7 are arranged at the remaining three vertices of the imaginary or real square (Fig. 5). In this case the principal condition is fulfilled since the main legs 6 and 7 are located at the vertices of the imaginary or real isosceles triangle at the base of UAV, formed by two adjacent sides 19 of the square and its diagonal 20. There may be more than one additional leg at the base of UAV, however any of them must be outside the imaginary isosceles triangle.

Discs 3 can be driven either separately by two drives 13 (Fig. 7-9), or together by one drive joint via a belt, drive line or any other drive. Besides, the drives can be installed directly into the discs (hub motor). Discs 3 rotate in opposite directions so that spirals 5, arranged on them, perform a gripping movement during rotation.

A disc drive is an electric, hydraulic or pneumatic motor with or without a reducer, or is a threaded shaft 23 (Fig. 9), driven into rotation under the weight of UAV landed on a platform. Optimally, discs 3 are made of a water-resistant material such as anodized aluminum.

Platform 1 can be additionally equipped with sensors 22 of position and rotation of disc (Fig. 7, 8) in order to detect malfunctions in the operation of the platform.

To provide access for the systems of ground station 8, which includes landing platform 1 as part thereof, to the payload and/or energy sources 30 of UAV 2, the platform may comprise one or more technological openings 14 (Fig. 1, 4) arranged between disks 3 and groove(s) 4.

### Description of system operation

If platform 1 is not stationary at the ground station 8, then the ground station ensures such position of landing platform 1, which enables UAV 2 to land on it in normal mode. UAV 2 approaches and lands on landing platform 1 (Figs. 10, 11, 12, 13). During landing UAV 2 on the landing platform, it is sufficient to ensure that two main cylindrical legs are on the respective discs 3 of platform 1, and the third leg 7 is in close proximity of one of the grooves 4 of the platform (Fig. 11).

After UAV lands on the landing platform, discs 3 are started to rotate in opposite directions 27, 28 (if one rotates clockwise, then the other rotates counterclockwise) so that spirals 5 (5a and 5b) would grip the legs 6 of UAV located on the disks and push them towards the centers of disks 3 (Fig. 12). Each disc 3 is rotated in its own direction, however always in the same direction.

If discs 3 are driven by threaded shaft 23, then, when UAV 2 is landing on platform 1, it presses the platform with its own weight (Fig. 9). When affected by this force, platform 1 descends and rotates shaft 23, which then rotates the discs with spirals 5, thereby positioning and aligning UAV 2.

Since for complete positioning and aligning of UAV a finite number of full revolutions of the disk (and therefore of the shaft) is required, not exceeding the number of spiral turns plus one, the system can be completely mechanical and does not require any external energy.

After the finite number of full revolutions of discs 3, the legs 6 and 7 of UAV, located on discs 3, are pushed by spirals 5 into the centers of discs 3, while the retractable pin 15 of third leg 7 is moved into one of the grooves 4 of the platform (as in Fig. 13). Therefore, UAV 2 is not only accurately positioned on platform 1, bet also precisely oriented relative to it.

Optionally, rotation of discs 3 stops at the moment when the beginnings of spirals 5 are blocking the legs 6 and 7 of UAV in centers 21 of discs 3, preventing UAV from leaving the end position on the platform under the action of external lateral factors (e.g., wind).

At completing of the positioning and aligning procedure, ground station systems perform the necessary manipulations (actions) with UAV payload and/ or energy sources 30.

### Examples of embodiments of positioning and aligning

1. Example of positioning and aligning of UAV with three main legs at the vertices of the equilateral triangle at the base of UAV with three correct alignments on the platform.

All three main legs of UAV are made the same - with a cylindrical skirt of the same diameter and having a retractable pin at the bottom. The diameter of the discs is slightly smaller than half the length of the side of the triangle at the base of UAV (for example, as in Fig. 13). The distance between centers 21 of the discs is equal to the length of side 31 of the triangle. The center of the groove is at the vertex opposite to the side, connecting the centers of the disks, and its length is equal to the length of the side of the triangle. The groove runs along the bisector of the triangle.

After the UAV has landed on the platform, the discs are starting to rotate in opposite directions 27, 28.

Since the platform, with the exception of the groove, and the discs form a continuous horizontal surface, the retractable pins of the legs of UAV, located on the platform discs after landing, are not pushed out and do not prevent the legs from sliding along the side surfaces of the spiral guides of discs during their rotation.

The spiral guides grip two of the three legs, located on the respective discs, and guide them toward their centers. During this movement, the third leg is forced to cross the groove on the platform at least once (see Figs. 11 and 12), and, during such crossing, the pin of that leg is pushed downward and remains in the groove until the end of the positioning process. After fixing the retractable pin in the groove, the spiral guides of the discs, rotating in opposite directions, inevitably push the legs, located on them, to their centers. As a result, all three legs get into the correct position on the platform.

Correct alignment is when the retractable pin of any of the legs is in the groove of the platform, and the remaining two cylindrical legs are in the centers of the respective discs. All three possible positions are symmetrical with respect to rotation by 0, 120, and 240 (-120) degrees around the vertical axis passing through the center of the triangle.

The arrangement of the legs at the vertices of the equilateral triangle ensures the arrangement of the center of gravity of UAV on the axis passing through the center of the triangle (the point of intersection of its bisectors) and, accordingly, the optimal distribution of UAV weight on the legs.

2. Example of positioning and aligning UAV with three main legs and one additional leg at the vertices of the imaginary square with two correct orientations on the platform.

The two main cylindrical legs are arranged at diagonally opposite vertices of the square, one of the remaining main legs is equipped with a retractable pin, and the fourth leg is an additional one.

The diameter of the discs is slightly smaller than half the diagonal of the square, and the distance between the centers of the discs is equal to the diagonal length of the square. The platform is equipped with two grooves, arranged along the diagonal of the square, perpendicular to the diagonal with the centers of the discs on it. The centers of the grooves are at the vertices of this diagonal, and the length of each groove is equal to the length of the side of the square. After the UAV has landed on the platform, the discs are rotated in opposite directions.

Since the platform, with exception of the grooves, and the discs form a continuous horizontal surface, the retractable pins of the UAV legs, located on the platform discs after landing, are not pushed out and do not prevent the legs from sliding along the side surfaces of the spiral guides of discs during disc rotation.

The spiral guides grip two legs, located on the respective discs, and guide them toward their centers. During this movement, the third main leg is forced to cross one of the grooves on the platform at least once, and, during such crossing, the pin of that leg is pushed down and remains in the groove until the end of the positioning process. After fixing the retractable pin in the groove, the spiral guides of the discs, rotating in opposite directions, inevitably push the legs, located on them, into their centers. As a result, all three legs get into the correct position on the platform.

Correct alignment is when the retractable pin of a respective leg is in one of the two grooves of the platform, and the remaining two cylindrical legs are in the centers of the respective discs. All two positions are symmetrical with respect to rotation by 0 and 180 (-180) degrees around the vertical axis passing through the center of the square.

The arrangement of the legs at the vertices of the square ensures the arrangement of the UAV center of gravity on the axis passing through the center of the square (the point of intersection of its diagonals) and, accordingly, the optimal distribution of UAV's weight on the legs.

As can be seen from the above, compared to the known technical level, the proposed solution has the following advantages over the prior art both in the simplicity and reliability of the design solution and the efficiency of centering and aligning of the aerial vehicle:
a) The platform does not require a strict UAV perimeter, particularly a symmetrical or round one. The weight of the proposed platform is lower;
b) The spirals do not clamp the object at the center, but instead move the object to the center. The solution does not create any stress loads on the aerial vehicle and there is no risk of gripping it into the wrong position or damaging it during an improper landing;
c) Flat continuous discs are driven by a conventional motor and do not require any additional complex mechanical systems to rotate them;
d) The discs are not allowing water or dirt to pass through, on the contrary, they drain them away from the disc drives , acting as protective umbrellas;
e) The groove is straight and, optimally, can be through (not blind), and does not require any mechanics installed under the groove. Therefore, grooves are not a factor for reducing reliability;
f) Since the two discs center the two legs of the aerial vehicle, UAV is not only moved to the correct position on the platform, but is also correctly and unambiguously oriented onto it.
g) If one or two legs of the aerial vehicle land on the spiral during landing, the legs will eventually jump it off as it rotates and end up on its outer side. In this case the spiral will automatically grip the leg on the next revolution of the disc and UAV centering will still end successfully;
h) If the leg (one or two) of the aerial vehicle ends up on the outer side of the spiral during landing, then the spiral will automatically grip the leg on the next revolution and UAV centering will still end successfully;
i) The proposed system does not require reset or preparation before landing UAV on it - it is possible to start rotation of the discs (each in its own correct direction, which is always the same one) before or after landing the aerial vehicle;
k) The solution does not necessarily require end point position sensors and will not suffer in any way from, for example, constant disk rotation;
l) Even if only one UAV leg got onto the disc during landing, there is still a high probability of its successful centering.

### Industrial applicability

Autonomous UAV service systems require correct positioning and aligning of UAV on the landing platform to charge their energy sources or to replace them or the payload. The described system is intended for such service systems and can be applied in the following areas:
- in autonomous pesticide spraying systems used in agricultural fields (requires autonomous filling of the spraying module and fast and frequent replacement of batteries);
- in solar power plant mirror or panel washing and cooling systems;
- in parcel, shopping, and medication delivery systems;
- in military intelligence and tactical systems on the basis of UAV;
- in perimeter monitoring systems for civilian and military facilities, and others.

### List of positions:

1 landing platform;
2 unmanned aerial vehicle (UAV) with vertical take-off and landing;
3 flat disk (centering element);
4 groove on the landing platform (centering element);
4b additional groove arranged symmetrically to the main one;
5 spiral guide on the disk, general view (5a right-handed, 5b left-handed);
6 main cylindrical landing leg;
7 main landing leg with retractable pin;
8 ground station;
9 imaginary or real triangle at the base of UAV;
10 center of imaginary or real triangle;
11 line along which the groove(s) are arranged;
12 one of the bisectors of imaginary or real triangle;
13 disk drive(s);
14 opening on the landing platform (1) for access to the payload and/ or energy sources of UAV (2);
15 retractable pin;
16 additional landing leg;
17 imaginary or real square at the base of UAV;
18 center of imaginary or real square;
19 one of the sides of imaginary or real square;
20 one of the diagonals of imaginary or real square;
21 center of disk;
22 disk position and/or rotation sensor;
23 threaded shaft driving the drive 13 into rotation under the weight of UAV;
24 landing direction of UAV 2;
25 direction of force of the action of the inner surface of spiral guide 5b on the cylindrical leg of UAV 2;
26 direction of forced movement of the main landing leg with retractable pin 15;
27 and 28 opposite directions of rotation of the discs ensuring the gripping movement of the spiral guides on them;
29 forced movement direction of the main landing leg with a retractable pin, where the pin is inserted into groove 4;
30 payload and/ or energy source of UAV;
31 base of imaginary or real triangle;
32 group of centering means comprising a pair of discs 3 and groove 4.

## Claims

1. Landing platform (1) with a flat horizontal surface for positioning an unmanned aerial vehicle (2), comprising located on the platform means for centering of landing the unmanned aerial vehicle by using at least two elements of the platform, each element comprising a narrow spiral guide converging towards a center of the respective element, wherein the centering means further comprises: at least a drive (13) to spin the spiral guides, at least a groove (4, 4b) and a pair of adjacent rotatable flat discs (3); wherein each groove (4, 4b) is arranged on a plane of the platform (1) along a line of symmetry between the discs (3), wherein each groove (4, 4b) is a straight groove; each disc (3) is made integral with one corresponding spiral guide (5) converging towards the center and protruding above the surface of the disc, wherein each spiral guide (5) is configured to interact with a the supporting element of the landing unmanned aerial vehicle and to enable the supporting element of the unmanned aerial vehicle to slide towards the center (21) of the disc (3) during disc rotation, wherein the spiral on one disc is left-handed (5b), and on the other disc is right-handed (5a).

2. The landing platform according to claim *1,* ***characterised in* that** the upper surface of each disc (3) is fitted on the same level with the upper surface of the platform (1), and each spiral guide (5) is made as a strip fixed by its edge onto the disk (3) and configured with an offset from the center (21) of the disc (3) and enabling maximum slip contact with side surface of supporting element of landing unmanned aerial vehicle (2).

3. The landing platform according to claim 1 or 2, ***characterised in* that** each said spiral guide (5) is a logarithmic spiral, comprising from one to one and a half turns.

4. The landing platform according to any of preceding claims, ***characterised in* that** each said groove (4) is made on one or both sides of a line connecting the centers (21) of rotation of the discs (3), and is optionally through.

5. The landing platform according to any of preceding claims, ***characterised in* that** the at least one drive (13) driving the discs (3) into rotation in opposite directions (27, 28) are configured as either two separate or one joint drive, and can also be mounted directly in the discs (3); wherein each drive (13) drive the discs directly or via a reducer.

6. The landing platform according to any of preceding claims, ***characterised in* that** it is further equipped with disc's (3) position and/or rotation sensors (22).

7. The landing platform according to any of preceding claims, ***characterised in* that** the platform (1) in addition to and separate by the groove(s) and the discs is comprising one or more through holes (14) configured to operate with payload and/or energy sources (30) of the unmanned aerial vehicle (2) landed and positioned on the platform (1).

8. System for positioning and aligning of aerial vehicle on the landing platform, comprising the landing platform according to claims 1-7, and an unmanned aerial vehicle,
***characterised in* that** the unmanned aerial vehicle is capable of vertical take-off and landing, equipped with supporting elements, configured to interact with the spiral guides (5) on the discs (3) of the landing platform (1) and with the groove (4) on the platform, where the supporting elements are made in the form of three main landing legs (6, 7) of the same height, installed on the base of the unmanned aerial vehicle at vertices of an imaginary or real isosceles triangle (9), inscribed at the base of the unmanned aerial vehicle, wherein the landing leg (7) at the vertex opposite the base of the isosceles triangle (31) is equipped with retractable vertically downwards pin (15), while two other landing legs (6) are made cylindrical.

9. The system according to claim 8, ***characterised in* that** said retractable pin (15) is configured to fall into one of the groove(s) (4, 4b) of the landing platform (1), for example, under its own weight, or, preferably, being made with a pushing element inside, such as pushing spring, electric or pneumatic drive, and outer diameter of the pin (15) is corresponding to the width of the groove (4, 4b) of the platform.

10. The system according to any of claims 8 to 9, ***characterised in* that** the height of cylindrical leg (6) is corresponding to the height of each spiral guide (5) of the disk (3) of the platform (1), and an outer radius of the leg is corresponding to the offset of the spiral guide (5) from the center (21) of the disk (3) of the landing platform (1), wherein the cylindrical landing legs (6) are able to slide along the inner side surface of the respective spiral guides (5a, 5b) and for this purpose they are provided with cylindrical skirts rotating freely around an axis of the leg.

11. The system according to any of claims 8 to 10, ***characterised in* that** diameter of each disc (3) of the landing platform (1) is chosen to receive each cylindrical landing leg (6) on the respective disc (3) when the unmanned aerial vehicle (2) lands, and distance between the discs (3) is chosen so that axes of rotation of the discs (3) of the landing platform coincide with the axes of cylindrical landing legs (6) in final position of the unmanned aerial vehicle (2) on the landing platform (1).

12. The system according to any of claims 8 to 11, ***characterised in* that** the unmanned aerial vehicle (2) is further equipped with one or more additional landing legs (16) outside said imaginary or real isosceles triangle (9).

13. The system according to claim 12, ***characterised in* that** each groove (4) of the landing platform is arranged on both sides of the line connecting the centers (21) of rotation of the discs (3), where said imaginary or real triangle (9) is formed by two adjacent sides (19) and a diagonal (20) of imaginary or real square (17) at the base of the unmanned aerial vehicle (2), and the additional leg (16) is arranged on the fourth vertex of imaginary or real square (17).

14. The system according to any of claims 8 to 13, ***characterised in* that** one or all of the landing legs, other than two main cylindrical legs (6), are also made cylindrical.

15. The system according to any of claims 8 to 14, ***characterised in* that** some or all of the landing legs, other than main leg (7) with retractable pin (15), are also equipped with the retractable pin.

16. The system according to claims 14 and 15, ***characterised in* that** all the landing legs are made the same in construction.

17. The system according to any one of claims 8 to 16, ***characterised in* that** the upper surface of the discs (3) of the landing platform (1) and/or the bottom surface of the landing legs (6, 7, 16) of the unmanned aerial vehicle (2) is partly or completely made of low-friction material, such as polyoxymethylene, nylon or polytetrafluoroethene, and/or the bottom surface of the landing legs is made spherical.

18. The system according to any of claims 8 to 17, ***characterised in* that** the landing platform (1) is equipped with two or more groups of centering means comprising said pairs of discs (3) and respective grooves (4, 4b).

## Patentansprüche

1. Landeplattform (1) mit einer flachen horizontalen Oberfläche zum Positionieren eines unbemannten Luftfahrzeugs (2), umfassend auf der Plattform befindliche Mittel zum Zentrieren einer Landung des unbemannten Luftfahrzeugs unter Verwendung von mindestens zwei Elementen der Plattform, wobei jedes Element eine schmale Spiralführung umfasst, die zu einer Mitte des jeweiligen Elements hin konvergiert, wobei die Zentriermittel ferner umfassen: zumindest einen Antrieb (13) zum Drehen der Spiralführungen, zumindest eine Nut (4, 4b) und ein Paar benachbarter drehbarer flacher Scheiben (3);
wobei jede Nut (4, 4b) auf einer Ebene der Plattform (1) entlang einer Symmetrielinie zwischen den Scheiben (3) angeordnet ist,
wobei jede Nut (4, 4b) eine gerade Nut ist;
wobei jede Scheibe (3) integral mit einer entsprechenden Spiralführung (5) ausgebildet ist, die zur Mitte hin konvergiert und über die Oberfläche der Scheibe vorsteht, wobei jede Spiralführung (5) so konfiguriert ist, dass sie mit einem Stützelement des landenden unbemannten Luftfahrzeugs zusammenwirkt und es dem Stützelement des unbemannten Luftfahrzeugs ermöglicht, während einer Drehung der Scheibe zur Mitte (21) der Scheibe hin zu gleiten, wobei die Spirale auf einer Scheibe linksdrehend (5b) und auf der anderen Scheibe rechtsdrehend (5a) ist.

2. Landeplattform nach Anspruch 1, **dadurch gekennzeichnet, dass** die Oberseite jeder Scheibe (3) auf gleicher Höhe mit der Oberseite der Plattform (1) angebracht ist und jede Spiralführung (5) als Streifen ausgebildet ist, der mit seiner Kante an der Scheibe (3) befestigt ist und mit einem Versatz zur Mitte (21) der Scheibe (3) konfiguriert ist und einen maximalen Gleitkontakt mit einer Seitenfläche eines Stützelements eines landenden unbemannten Luftfahrzeugs (2) ermöglicht.

3. Landeplattform nach Anspruch 1 oder 2, **dadurch gekennzeichnet, dass** jede der Spiralführungen (5) eine logarithmische Spirale mit einer bis eineinhalb Windungen ist.

4. Landeplattform nach einem der vorhergehenden Ansprüche, **dadurch gekennzeichnet, dass** jede der Nuten (4) auf einer oder beiden Seiten einer Linie, die die Drehpunkte (21) der Scheiben (3) verbindet, ausgebildet ist und wahlweise durchgehend ist.

5. Landeplattform nach einem der vorhergehenden Ansprüche, **dadurch gekennzeichnet, dass** der mindestens eine Antrieb (13), der die Scheiben (3) in entgegengesetzte Richtungen (27, 28) in Drehung versetzt, entweder als zwei separate oder als ein gemeinsamer Antrieb ausgebildet ist und auch direkt in den Scheiben (3) montiert sein kann, wobei jeder Antrieb (13) die Scheiben direkt oder über ein Untersetzungsgetriebe antreibt.

6. Landeplattform nach einem der vorhergehenden Ansprüche, **dadurch gekennzeichnet, dass** sie zusätzlich mit Positions- und/oder Rotationssensoren (22) für Scheiben (3) ausgestattet ist.

7. Landeplattform nach einem der vorhergehenden Ansprüche, **dadurch gekennzeichnet, dass** die Plattform (1) zusätzlich zu und getrennt von der oder den Nuten und den Scheiben ein oder mehrere Durchgangslöcher (14) umfasst, die so konfiguriert sind, dass sie mit Nutzlast und/oder Energiequellen (30) des unbemannten Luftfahrzeugs (2) zusammenwirken, das auf der Plattform (1) gelandet und positioniert ist.

8. System zum Positionieren und Ausrichten eines Luftfahrzeugs auf der Landeplattform, umfassend die Landeplattform nach den Ansprüchen 1 bis 7 und ein unbemanntes Luftfahrzeug, **dadurch gekennzeichnet, dass** das unbemannte Luftfahrzeug zu vertikalem Starten und Landen fähig ist, mit Stützelementen ausgestattet ist, die so konfiguriert sind, dass sie mit den Spiralführungen (5) auf den Scheiben (3) der Landeplattform (1) und mit der Nut (4) auf der Plattform zusammenwirken, wobei die Stützelemente in Form von drei Hauptlandebeinen (6, 7) gleicher Höhe ausgebildet sind, die an der Basis des unbemannten Luftfahrzeugs an Eckpunkten eines imaginären oder realen gleichschenkligen Dreiecks (9) installiert sind, das an der Basis des unbemannten Luftfahrzeugs angelegt ist, wobei das Landebein (7) am Scheitelpunkt gegenüber der Basis des gleichschenkligen Dreiecks (31) mit einem vertikal nach unten gerichteten einziehbaren Stift (15) ausgestattet ist, während die beiden anderen Landebeine (6) zylindrisch ausgebildet sind.

9. System nach Anspruch 8, **dadurch gekennzeichnet, dass** der einziehbare Stift (15) so konfiguriert ist, dass er in eine der Nut(en) (4, 4b) der Landeplattform (1) fällt, beispielsweise unter seinem eigenen Gewicht, oder bevorzugt mit einem darin angeordneten Druckelement, wie einer Druckfeder, einem elektrischen oder pneumatischen Antrieb, ausgebildet ist und ein Außendurchmesser des Stifts (15) der Breite der Nut (4, 4b) der Plattform entspricht.

10. System nach einem der Ansprüche 8 bis 9, **dadurch gekennzeichnet, dass** die Höhe des zylindrischen Beins (6) der Höhe jeder Spiralführung (5) der Scheibe (3) der Plattform (1) entspricht und ein Außenradius des Beins dem Versatz der Spiralführung (5) zur Mitte (21) der Scheibe (3) der Landeplattform (1) entspricht, wobei die zylindrischen Landebeine (6) entlang der Innenseite der jeweiligen Spiralführungen (5a, 5b) gleiten können und zu diesem Zweck mit zylindrischen Schürzen versehen sind, die sich frei um eine Achse des Beins drehen.

11. System nach einem der Ansprüche 8 bis 10, **dadurch gekennzeichnet, dass** ein Durchmesser jeder Scheibe (3) der Landeplattform (1) so gewählt ist, dass jedes zylindrische Landebein (6) bei der Landung des unbemannten Luftfahrzeugs (2) auf der jeweiligen Scheibe (3) aufgenommen wird, und dass ein Abstand zwischen den Scheiben
(3) so gewählt ist, dass Drehachsen der Scheiben (3) der Landeplattform mit den Achsen der zylindrischen Landebeine (6) in einer Endposition des unbemannten Luftfahrzeugs (2) auf der Landeplattform (1) übereinstimmen.

12. System nach einem der Ansprüche 8 bis 11, **dadurch gekennzeichnet, dass** das unbemannte Luftfahrzeug (2) zusätzlich mit einem oder mehreren zusätzlichen Landebeinen (16) außerhalb des imaginären oder realen gleichschenkligen Dreiecks (9) ausgestattet ist.

13. System nach Anspruch 12, **dadurch gekennzeichnet, dass** jede Nut (4) der Landeplattform auf beiden Seiten der Verbindungslinie zwischen den Drehpunkten (21) der Scheiben (3) angeordnet ist, wobei das imaginäre oder reale Dreieck (9) durch zwei benachbarte Seiten (19) und eine Diagonale (20) eines imaginären oder realen Quadrats (17) an der Basis des unbemannten Luftfahrzeugs (2) gebildet wird und das zusätzliche Bein (16) am vierten Eckpunkt des imaginären oder realen Quadrats (17) angeordnet ist.

14. System nach einem der Ansprüche 8 bis 13, **dadurch gekennzeichnet, dass** eines oder alle der anderen Landebeine als die beiden zylindrischen Hauptbeine (6) ebenfalls zylindrisch ausgebildet sind.

15. System nach einem der Ansprüche 8 bis 14, **dadurch gekennzeichnet, dass** einige oder alle anderen Landebeine als das Hauptbein (7) mit einziehbarem Stift (15) ebenfalls mit dem einziehbaren Stift ausgestattet sind.

16. System nach den Ansprüchen 14 und 15, **dadurch gekennzeichnet, dass** alle Landebeine baugleich sind.

17. System nach einem der Ansprüche 8 bis 16, **dadurch gekennzeichnet, dass** die Oberseite der Scheiben (3) der Landeplattform (1) und/oder die Unterseite der Landebeine (6, 7, 16) des unbemannten Luftfahrzeugs (2) teilweise oder vollständig aus einem reibungsarmen Material wie Polyoxymethylen, Nylon oder Polytetrafluorethylen hergestellt ist und/oder die Unterseite der Landebeine kugelförmig ausgebildet ist.

18. System nach einem der Ansprüche 8 bis 17, **dadurch gekennzeichnet, dass** die Landeplattform (1) mit zwei oder mehr Gruppen von Zentriermitteln ausgestattet ist, die die Paare von Scheiben (3) und die jeweiligen Nuten (4, 4b) umfassen.

## Revendications

1. Plate-forme d'atterrissage (1) comportant une surface plane horizontale pour positionner un véhicule aérien sans pilote (2), comprenant des moyens de centrage, situés sur la plate-forme, pour l'atterrissage du véhicule aérien sans pilote utilisant au moins deux éléments de la plate-forme, chaque élément comprenant un guide en spirale étroite convergeant vers un centre de l'élément respectif, dans laquelle les moyens de centrage comprennent en outre :
au moins un mécanisme d'entraînement (13) pour faire tourner les guides en spirale, au moins une rainure (4, 4b) et une paire de disques plats rotatifs adjacents (3) ;
dans laquelle chaque rainure (4, 4b) est disposée sur un plan de la plate-forme (1) le long d'une ligne de symétrie entre les disques (3),
dans laquelle chaque rainure (4, 4b) est une rainure droite ;
chaque disque (3) est réalisé de façon à comporter comme partie intégrante de celui-ci un guide en spirale (5) correspondant convergeant vers le centre et faisant saillie au-dessus de la surface du disque, dans laquelle chaque guide en spirale (5) est configuré pour coopérer avec un élément de support du véhicule aérien sans pilote en cours d'atterrissage et pour permettre à l'élément de support du véhicule aérien sans pilote de glisser vers le centre (21) du disque (3) pendant la rotation du disque, dans laquelle la spirale sur un disque va vers la gauche (5b), et sur l'autre disque va vers la droite (5a).

2. Plate-forme d'atterrissage selon la revendication 1, **caractérisée en ce que** la surface supérieure de chaque disque (3) est installée au même niveau que la surface supérieure de la plate-forme (1), et chaque guide en spirale (5) est réalisé sous la forme d'une bande fixée par son bord sur le disque (3) et configurée avec un décalage par rapport au centre (21) du disque (3) et permettant un contact glissant maximal avec la surface latérale de l'élément de support du véhicule aérien sans pilote (2) en cours d'atterrissage.

3. Plate-forme d'atterrissage selon la revendication 1 ou 2, **caractérisée en ce que** chacun desdits guides en spirale (5) est une spirale logarithmique, comprenant un tour à un tour et demi.

4. Plate-forme d'atterrissage selon l'une quelconque des revendications précédentes, **caractérisée en ce que** chacune desdites rainures (4) est réalisée d'un côté ou des deux côtés d'une ligne reliant les centres (21) de rotation des disques (3), et est éventuellement traversante.

5. Plate-forme d'atterrissage selon l'une des revendications précédentes, **caractérisée en ce que** l'au moins un mécanisme d'entraînement (13) entraînant les disques (3) en rotation dans des sens opposés (27, 28) est réalisé sous la forme de deux mécanismes d'entraînement distincts ou d'un mécanisme d'entraînement combiné, et peut également être monté directement dans les disques (3) ; chaque mécanisme d'entraînement (13) entraînant les disques directement ou par l'intermédiaire d'un réducteur.

6. Plate-forme d'atterrissage selon l'une quelconque des revendications précédentes, **caractérisée en ce qu'**elle est en outre équipée de capteurs de position et/ou de rotation (22) de disque (3).

7. Plate-forme d'atterrissage selon l'une quelconque des revendications précédentes, **caractérisée en ce que** la plate-forme (1) comprend, en plus de la ou des rainures et des disques, et séparés par ceux-ci, un ou plusieurs trous traversants (14) configurés pour fonctionner avec des sources de charge utile et/ou d'énergie (30) du véhicule aérien sans pilote (2) ayant atterri et étant positionné sur la plate-forme (1).

8. Système de positionnement et d'alignement d'un véhicule aérien sur la plate-forme d'atterrissage, comprenant la plate-forme d'atterrissage selon les revendications 1 à 7, et un véhicule aérien sans pilote, **caractérisé en ce que** le véhicule aérien sans pilote est apte à décoller et à atterrir verticalement, est équipé d'éléments de support, configurés pour coopérer avec les guides en spirale (5) sur les disques (3) de la plate-forme d'atterrissage (1) et avec la rainure (4) sur la plate-forme, les éléments de support étant réalisés sous la forme de trois pieds principaux d'atterrissage (6, 7) de même hauteur, installés sur la base du véhicule aérien sans pilote aux sommets d'un triangle isocèle imaginaire ou réel (9), inscrit à la base du véhicule aérien sans pilote, le pied d'atterrissage (7) au sommet opposé à la base du triangle isocèle (31) étant équipé d'un axe rétractable orienté verticalement vers le bas (15), tandis que deux autres pieds d'atterrissage (6) sont réalisés sous une forme cylindrique.

9. Système selon la revendication 8, **caractérisé en ce que** ledit axe rétractable (15) est configuré pour tomber dans l'une des rainures (4, 4b) de la plate-forme d'atterrissage (1), par exemple sous son propre poids, ou, de préférence, est réalisé avec un élément de poussée à l'intérieur, tel qu'un ressort de poussée, un mécanisme d'entraînement électrique ou pneumatique, et le diamètre extérieur de l'axe (15) correspond à la largeur de la rainure (4, 4b) de la plate-forme.

10. Système selon l'une quelconque des revendications 8 et 9, **caractérisé en ce que** la hauteur du pied cylindrique (6) correspond à la hauteur de chaque guide en spirale (5) du disque (3) de la plate-forme (1), et un rayon extérieur du pied correspond au décalage du guide en spirale (5) par rapport au centre (21) du disque (3) de la plate-forme d'atterrissage (1), les pieds d'atterrissage cylindriques (6) pouvant glisser le long de la surface latérale intérieure des guides en spirale (5a, 5b) respectifs et étant à cet effet pourvus de jupes cylindriques tournant librement autour d'un axe du pied.

11. Système selon l'une quelconque des revendications 8 à 10, **caractérisé en ce que** le diamètre de chaque disque (3) de la plate-forme d'atterrissage (1) est choisi pour recevoir chaque pied d'atterrissage cylindrique (6) sur le disque (3) respectif lorsque le véhicule aérien sans pilote (2) atterrit, et la distance entre les disques
(3) est choisie de telle sorte que les axes de rotation des disques (3) de la plate-forme d'atterrissage coïncident avec les axes des pieds d'atterrissage cylindriques (6) en position finale du véhicule aérien sans pilote (2) sur la plate-forme d'atterrissage (1).

12. Système selon l'une quelconque des revendications 8 à 11, **caractérisé en ce que** le véhicule aérien sans pilote (2) est en outre équipé d'un ou de plusieurs pieds d'atterrissage supplémentaires (16) à l'extérieur dudit triangle isocèle imaginaire ou réel (9).

13. Système selon la revendication 12, **caractérisé en ce que** chaque rainure (4) de la plateforme d'atterrissage est disposée des deux côtés de la ligne reliant les centres (21) de rotation des disques (3), ledit triangle imaginaire ou réel (9) étant formé par deux côtés adjacents (19) et une diagonale (20) d'un carré imaginaire ou réel (17) à la base du véhicule aérien sans pilote (2), et le pied supplémentaire (16) étant disposé sur le quatrième sommet du carré imaginaire ou réel (17).

14. Système selon l'une quelconque des revendications 8 à 13, **caractérisé en ce qu'**un ou tous les pieds d'atterrissage, autres que deux pieds principaux cylindriques (6), sont également réalisés sous une forme cylindrique.

15. Système selon l'une quelconque des revendications 8 à 14, **caractérisé en ce que** certains ou l'ensemble des pieds d'atterrissage, autres que le pied principal (7) pourvu de l'axe rétractable (15), sont également équipés de l'axe rétractable.

16. Système selon les revendications 14 et 15, **caractérisé en ce que** tous les pieds d'atterrissage sont réalisés avec la même structure.

17. Système selon l'une quelconque des revendications 8 à 16, **caractérisé en ce que** la surface supérieure des disques (3) de la plate-forme d'atterrissage (1) et/ou la surface inférieure des pieds d'atterrissage (6, 7, 16) du véhicule aérien sans pilote (2) sont partiellement ou totalement réalisées en un matériau à faible frottement, tel que du polyoxyméthylène, du nylon ou du polytétrafluoroéthylène, et/ou la surface inférieure des pieds d'atterrissage est réalisée sous une forme sphérique.

18. Système selon l'une quelconque des revendications 8 à 17, **caractérisé en ce que** la plate-forme d'atterrissage (1) est équipée de deux groupes ou plus de moyens de centrage comprenant lesdites paires de disques (3) et des rainures (4, 4b) respectives.
